# EUROPEAN PATENT SPECIFICATION

(11) **EP 2 378 647 B1**
(45) Date of publication and mention of the grant of the patent: **12.02.2014**
(21) Application number: 11159749.8
(22) Date of filing: 25.03.2011
(51) Int. Cl.: H02K 15/095

(54) **Device for winding wire on poles having any geometry**
Vorrichtung zum Wickeln von Draht auf Polen mit beliebiger Geometrie
Dispositif pour enrouler des fils autour de poteaux de géométrie quelconque

(30) Priority: 13.04.2010 IT MI20100617
(43) Date of publication of application: 19.10.2011
(73) Proprietor: MARSILLI & CO. S.P.A., 26012 Castelleone (CR) (IT)
(72) Inventor: Parati, Gian Battista, 26012, Castelleone CR (IT)
(74) Representative: Modiano, Micaela Nadia

(56) References cited:
- EP-A1- 0 982 837
- EP-A2- 1 049 237
- JP-A- 2003 204 659
- US-A1- 2007 181 732

## Description

The present invention relates to a device for winding wire on poles having any geometry.

As is known, several types of apparatus that wind an electrical wire on poles or on spools and are based on the most disparate constructive criteria are already commercially available.

A first solution uses spools which are rotated about their own axis and accordingly wind the wire on their surface.

This type of solution generally causes considerable stresses on the wire, with the possibility of breakage or stretching of the copper wire, which alters its useful cross-section.

Other known solutions, such as for example the one disclosed in Italian Patent Application no. MI2009A000739, assumed included herein by reference, use a wire guide which is movable, for example by oscillation, around the pole on which the wire is to be wound, thus obtaining a winding which does not cause particular tensions on the copper wire.

Although this solution is valid in many respects, it suffers the drawback that it is relatively slow, with winding times that affect significantly the cost of the final product.

EP 1 049 237 discloses a winding machine including three ball screw mechanisms for moving a wire rod guiding nozzle section in three dimensional directions (lateral, lengthwise, and vertical), and a nozzle lateral movement mechanism. A connecting section directly connects two of the mechanisms with the nozzle section such that the nozzle section moves unrestricted by such two mechanisms in a direction of movement of the other movement mechanism, which in turn movably supports the two mechanisms.

The aim of the present invention is to eliminate the drawbacks noted above, by providing a device for winding wire on poles having any geometry that allows to reduce winding times significantly, with the advantage of following any shape or geometry of the pole.

Within this aim, an object of the invention is to provide a winding device that allows to provide the simultaneous winding of a plurality of poles or spools, thus increasing the production advantages.

Another object of the present invention is to provide a device for winding wire on poles having any geometry which, thanks to its particular constructive characteristics, is capable of giving the greatest assurances of reliability and safety in use.

Another object of the present invention is to provide a device for winding wire that can be obtained easily starting from commonly commercially available elements and materials and is also competitive from a merely economical standpoint.

In accordance with the invention, there is provided a device for winding wire on poles having any geometry as defined in the appended claims.

Further characteristics and advantages will become better apparent from the description of a preferred but not exclusive embodiment of a device for winding wire on poles having any geometry, illustrated by way of non-limiting example in the accompanying drawings, wherein:
Figure 1 is a schematic plan view of a first embodiment of the device in the inactive position;
Figures 2, 3, 4 and 5 are views, in succession, of the movement of the wire guide around the poles;
Figure 6 is a side elevation view of the device;
Figure 7 is a schematic plan view of a different embodiment of the winding device, in inactive conditions;
Figures 8, 9, 10 and 11 are views, in succession, of the movement of the wire guides around the poles;
Figure 12 is a schematic side elevation view of the device.

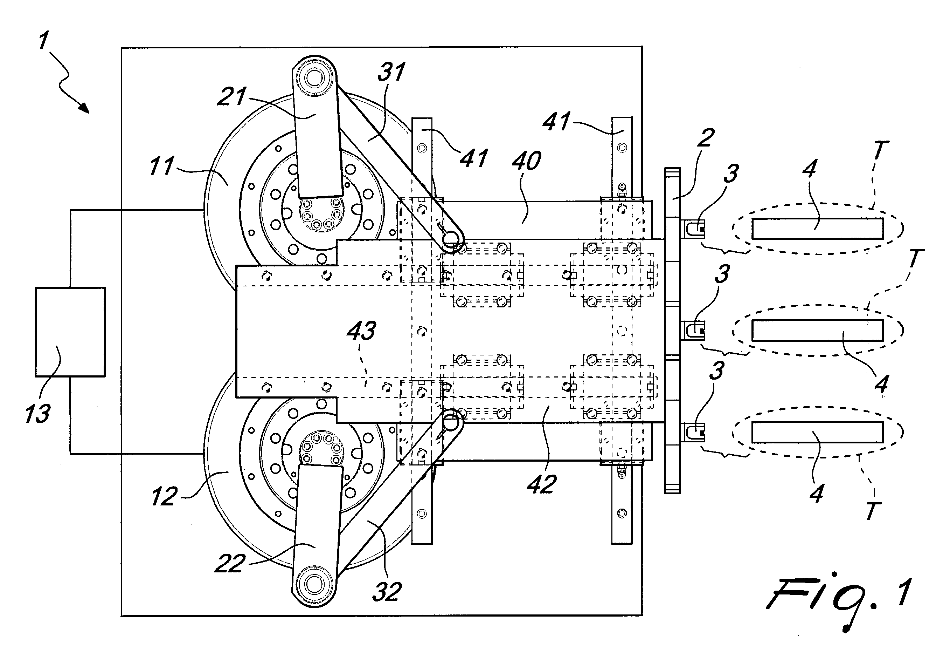

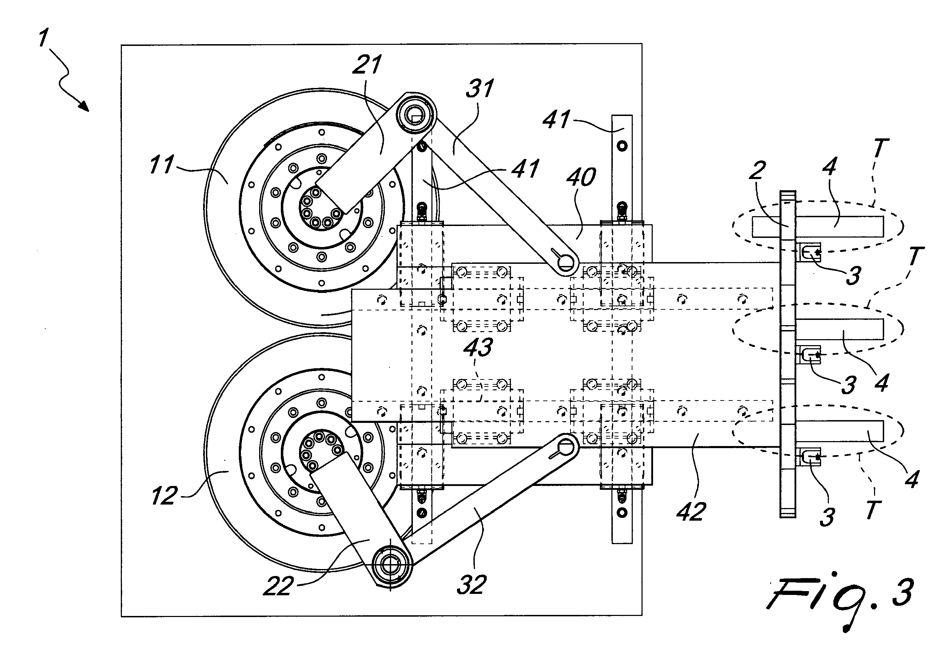

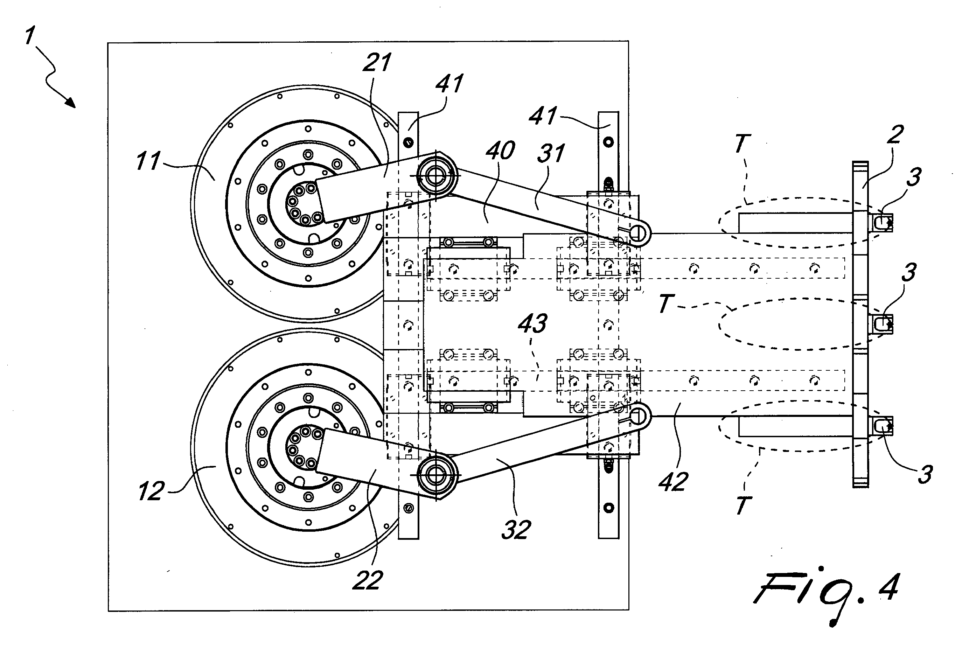

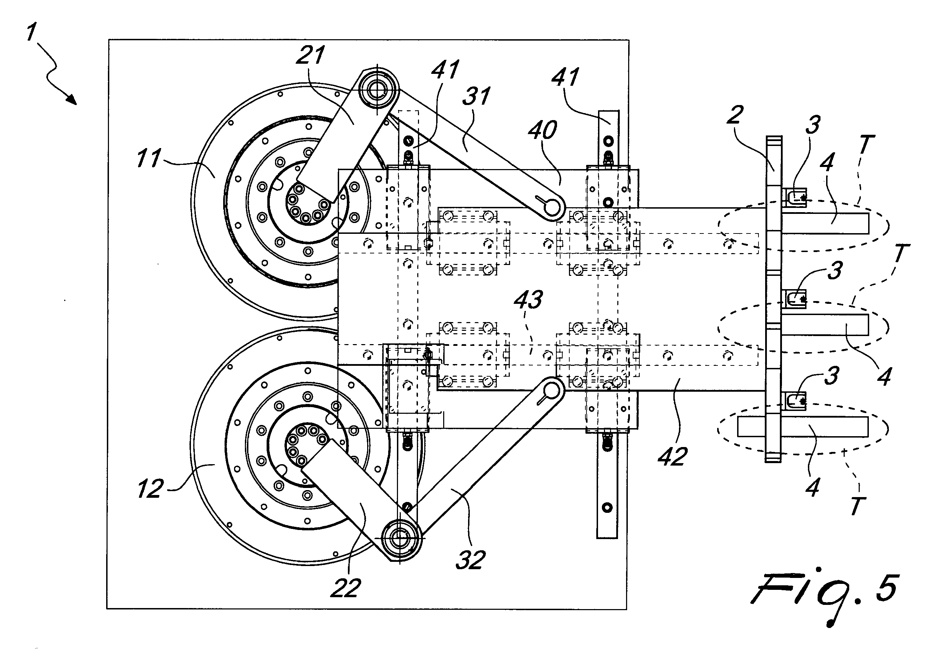

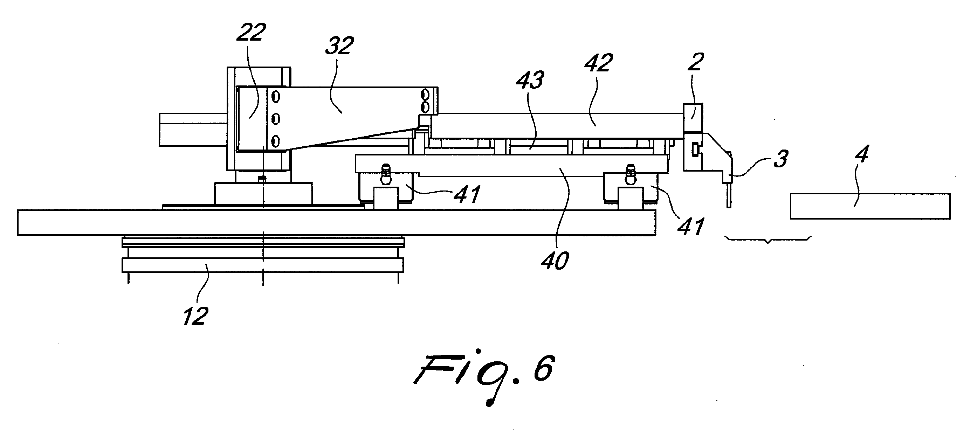

With reference to the figures, and in particular to Figures 1 to 6, the device for winding wire on poles having any geometry, generally designated by the reference numeral 1, comprises a bar 2, which supports a plurality of wire guides 3 for winding copper wires on poles, generally designated by the reference numeral 4.

The wire guides 3 are subjected to a movement that allows them to provide an elliptical trajectory T, as shown schematically in Figures 1 to 6; the type of trajectory to which the wire guides are subj ected depends on the characteristics of the various poles 4 and in any case can be modified as a function of the constructive type.

The peculiarity of the invention resides in that motor means are provided which are advantageously constituted by a first torque motor 11 and a second torque motor 12. Torque motors are a type of motor having a high acceleration/torque and offering the possibility to provide portions of rotation in alternating directions in extremely short times.

In the specific case, the torque motors 11 and 12 that are used are subjected to a rotation which is at the most 90° in order to provide the type of trajectory required for the several wire guides.

The torque motors 11 and 12 are connected one another by a control assembly, generally designated by the reference numeral 13, which allows to provide the desired movement of each one of the motors, so as to assume the required trajectories.

The bar 2 is connected to the motors 11 and 12 by way of kinematic means which are designed to provide a movement of the bar which is constituted by a translation substantially parallel to itself.

The kinematic means comprise a first actuation lever 21, which is connected radially to the first motor 11 and is connected by pivoting to a first connection arm 31, while a second actuation lever 22 is connected radially to the second motor 12 and is pivoted to the end of a second connection arm 32.

The arms 31 and 32 are connected to the bar 2 by way of the interposition of guiding means which, in the embodiment shown in Figures 1 to 6, are constituted by a lower carriage 40, which is movable on transverse guides 41. An upper carriage 42 is connected to the lower carriage 40, supports the bar 2 and can move with respect to the lower carriage 40 on longitudinal guides 43 which are perpendicular to the transverse guides 41.

In this manner there is a combination of movements which are a function of the angular rotation of the motors 11 and 12 and provide the desired trajectory around the poles 4.

To vary the shape of the trajectories it is sufficient to vary the relative movement between the two motors, which, in order to perform a full rotation of the wire guides around the corresponding poles, are subject only to a movement which is at most 90° in alternating directions, thus being able to provide an extremely large number of rotations per second of the wire guides around the poles.

With reference to the figures, in Figure 1 the motors are in the inactive position and the wire guides are spaced from the poles.

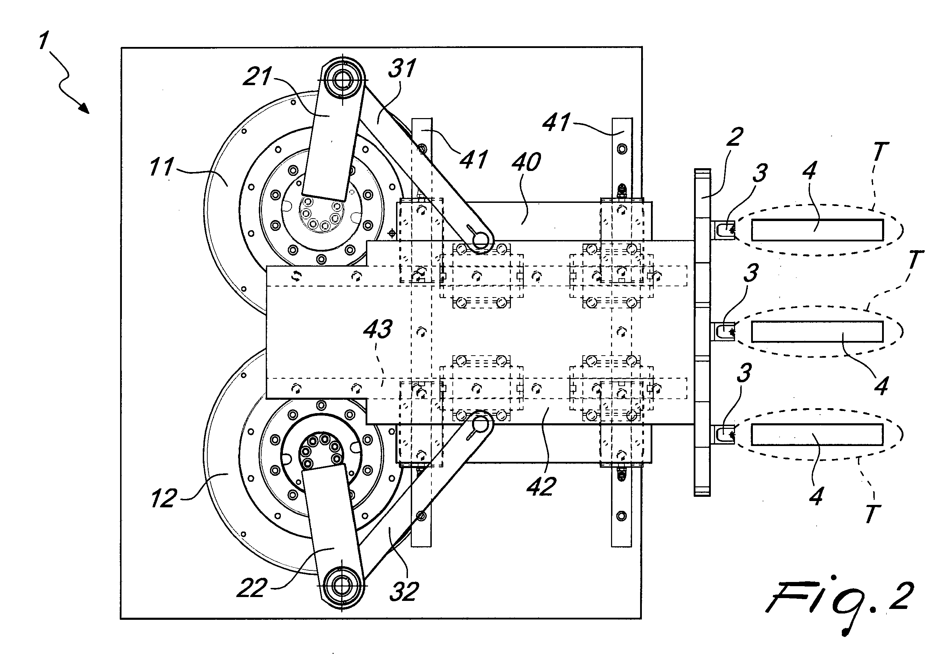

During the active steps, the wire guides are first brought at the trajectory, as shown in Figure 2, and then the alternating rotation of the motors 11 and 12 allows, as a function of the different rotations of the two motors, to provide all the trajectories deemed appropriate, obtaining a translation of the bar 2 always parallel to itself.

The bar 2 can move equally on a horizontal plane or on a vertical plane as a function of the plane on which the poles are arranged.

Providing layering of the wire requires an additional controlled axis which can have a movement of the kinematic system at right angles to the working plane or a controlled movement of the pole to be wound, along a plane which is perpendicular to the working plane of the device.

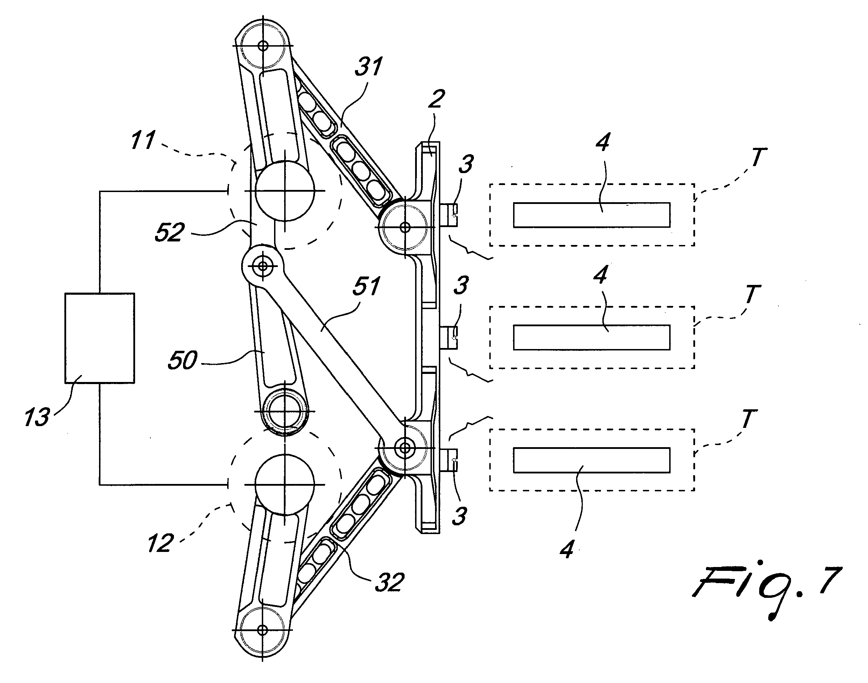

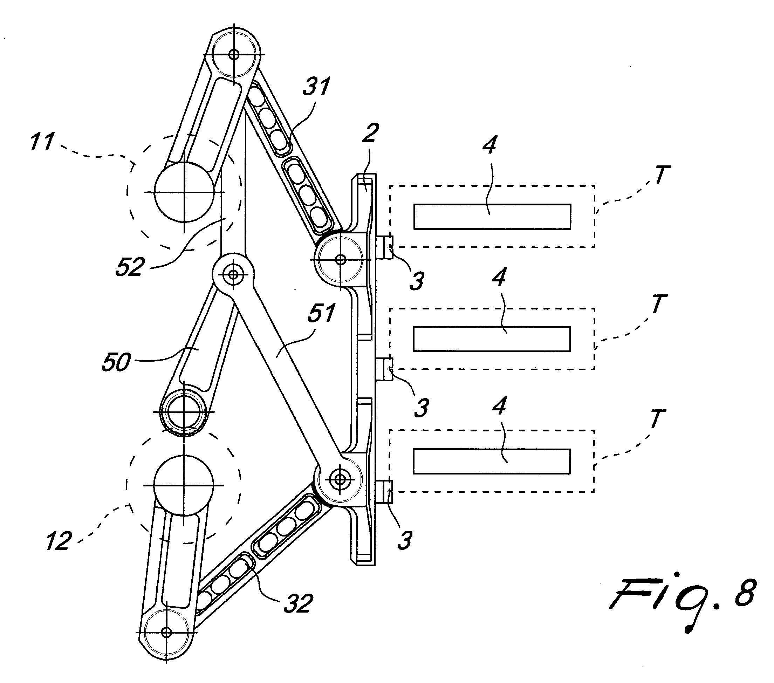

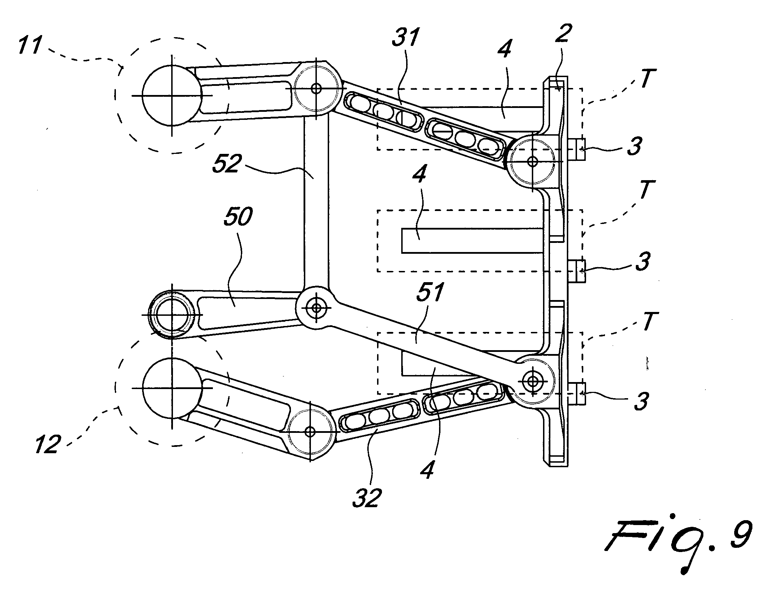

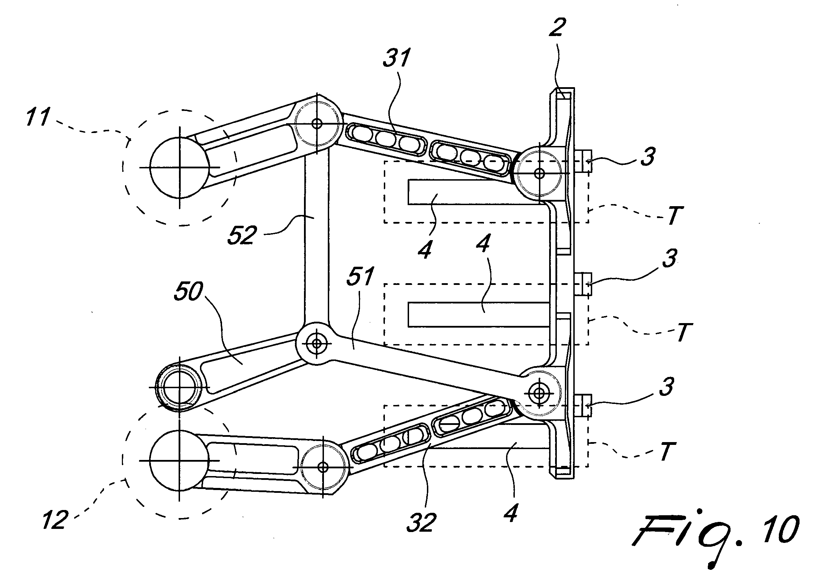

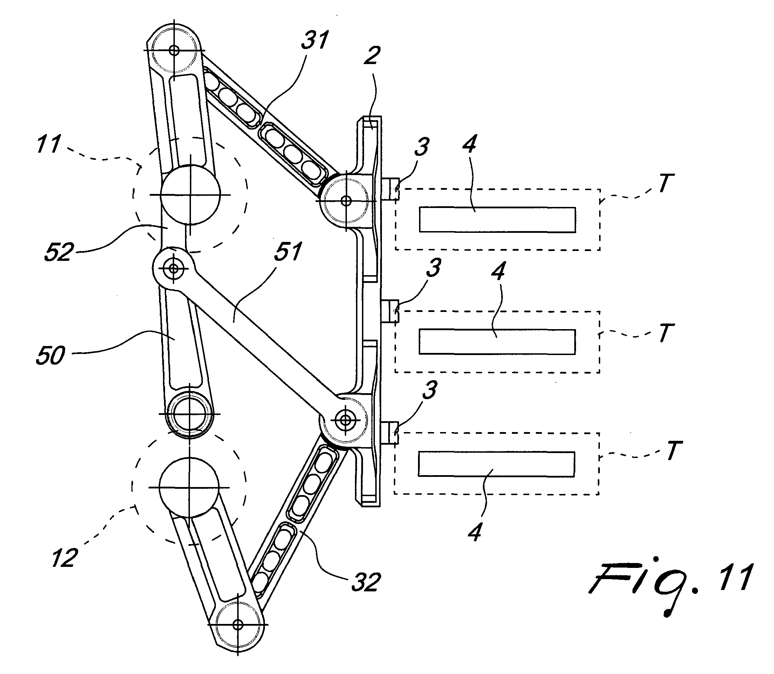

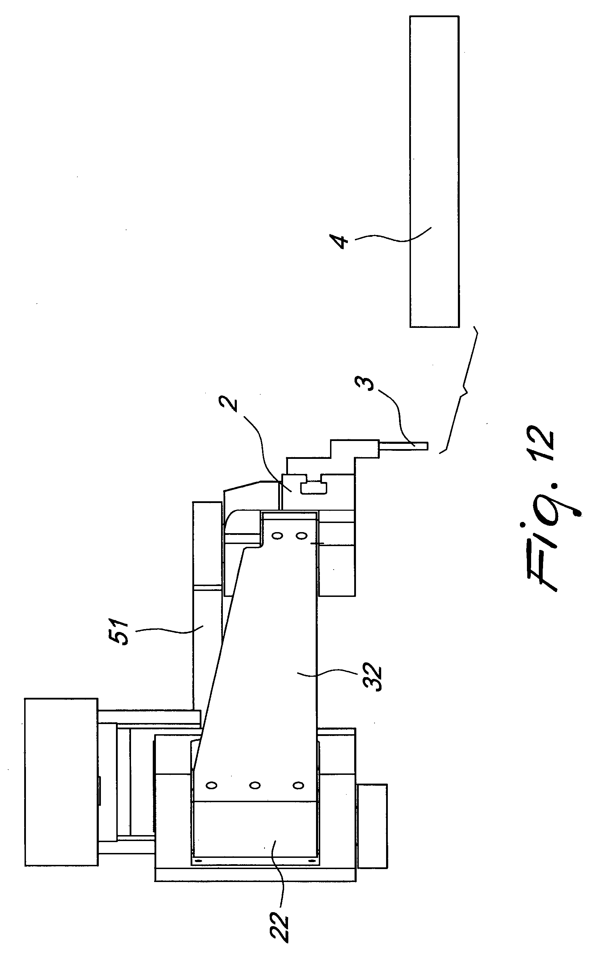

Figures 7 to 12 illustrate a solution which is conceptually similar to the preceding one and has proved to be preferable in the case of windings of wires having a small diameter, i.e., smaller than 2.5 mm, while the solution shown in Figures 1 to 6 is preferably for wires having a larger diameter.

In winding the poles with wires having a small cross-section, the bar of the kinematic system is stressed intensely by the greater resistance opposed by the wire; accordingly, the guiding means are provided by a guiding lever 50 which is pivoted, at one of its ends, to the structure that supports the motors, which are again designated by the reference numerals 11 and 12 and again actuate the actuation levers, designated by the reference numerals 21 and 22, and the connection arms 31 and 32.

The guiding lever 50, at one of its ends, is pivoted to the supporting structure, while at the other end it is connected to a first guiding arm 51, which is substantially parallel to one of the connecting arms, for example the first arm 31. A second guiding arm 52 is pivoted in the pivoting point between the arm 51 and the lever 50 and, at its other end, in the pivoting point between the first connection arm 31 and the first actuation lever 21. The arm 52 has a length that is substantially equal to the distance between the pivoting points of the connecting arms 31 and 32 to the wire guide supporting bar, again designated by the reference numeral 2.

In this manner, the guiding means form a parallelogram which is obtained with the first guiding arm 51, the second guiding arm 52, the first connection arm 31 and the portion of bar 2 between the pivoting points of the connection arms 31, 32, which causes the bar to be subjected to a translation parallel to itself.

In this case also, the motors 11 and 12, which are torque motors, are functionally interconnected by means of a control unit 13 which adjusts their rotation, in a manner fully similar to what was described earlier, allowing to make the wire guides assume the trajectory deemed appropriate; specifically, the trajectory T assumes a substantially rectangular shape, but any trajectory is obviously possible.

It is noted that the shape of the trajectories is derived exclusively from the different mutual rotation of the motors 11 and 12, which create a composition of motion that can vary as a function of the specific angles assumed by the connecting arms of the actuation levers, maintaining however always a translation of the wire guide supporting bar which is parallel to itself and is provided on a plane which is a function of the arrangement of the poles.

From what has been described above it can be seen that the invention achieves the intended aim and objects, and in particular the fact is stressed that a device is provided which, by using torque motors, allows to perform rotations of the motors in alternating directions along an angle which is at most 90°, thus being able to reduce production times thanks to the fact that each alternating oscillation of the motors is matched by a full rotation of the corresponding wire guide around the pole.

Moreover, the device of the invention, by using torque motors, in addition to reducing significantly the winding times, allows a further saving, since the supporting bar 2 has a plurality of wire guides which simultaneously wind a plurality of poles.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application No. MI2010A000617 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for winding wire on poles having any geometry, comprising a bar (2) which supports a wire guide (3) with at least one wire guiding tube, said bar (2) being movable through the action of motor means (11, 12) that generate a continuously alternating motion, kinematic means (21, 22, 31, 32) being further provided which are interposed between said motor means (11, 12) and said bar (2) for the translation of said bar (2) substantially parallel to itself, said motor means comprising a first torque motor (11) and a second torque motor (12), **characterized in that** said kinematic means comprise a first actuation lever (21) and a second actuation lever (22) connected respectively to said first torque motor (11) and to said second torque motor (12) and pivoted respectively to a first connection arm (31) and a second connection arm (32), which are pivotally connected to said bar (2) through the interposition of guiding means, wherein the shape of the trajectories assumed by the wire guide (3) is derived exclusively from the different mutual rotation of said motors (11,12), which create a composition of motion that can vary as a function of the specific angles assumed by said connecting arms (31, 32) of the actuation levers, maintaining however always a translation of the wire guide supporting bar (2) which is parallel to itself.

2. The device according to claim 1, **characterized in that** it comprises a control assembly (13) interconnected between said torque motors (11, 12) for an interconnected actuation thereof.

3. The device according to one or more of the preceding claims, **characterized in that** said guiding means comprise a lower carriage (40) movable on transverse guides (41) which are substantially parallel to said bar (2), and an upper carriage (42), connected to said lower carriage (40) and movable on longitudinal guides (43) which are substantially perpendicular with respect to said transverse guides (41), said connection arms (31, 32) being associated with said upper carriage (42) which supports said bar (2).

4. The device according to one of the claims 1 or 2, **characterized in that** said guiding means comprise a guiding lever (50) pivoted, at one of its ends, to the supporting structure of said torque motors (11, 12) and, at the other end, to a first guiding arm (51) and a second guiding arm (52) pivoted respectively, at their other ends, to the pivoting point of one of the connecting arms (32) to said bar (2) and to the pivoting point between the other one (31) of said connecting arms and the corresponding actuation lever (21).

5. The device according to claim 4, **characterized in that** said first guiding arm (51) is arranged substantially parallel to said other arm (31) of said connecting arms and has the same length, said second guiding arm (52) having a length that is equal to the distance between the pivoting points of said connecting arms (31, 32) to said bar (2) to provide a parallelogram connection between said first guiding arm (51), said second guiding arm (52), said other connecting arm (31) and said bar (2).

## Patentansprüche

1. Vorrichtung zum Wickeln von Draht auf Pole mit beliebiger Geometrie, umfassend einen Stab (2), der eine Drahtführung (3) mit mindestens einem Drahttührungsrohr trägt, wobei der Stab (2) durch die Funktion von Motormitteln (11, 12), die eine kontinuierliche Wechselbewegung erzeugen, beweglich ist, wobei weiter kinematische Mittel (21, 22, 31, 32), die zwischen den Motormitteln (11, 12) und dem Stab (2) angeordnet sind, für eine im Wesentlichen parallel zu sich selbst geführte Translationsbewegung des Stabs (2) vorgesehen sind, wobei die Motormittel einen ersten Regelmotor (11) und einen zweiten Regelmotor (12) umfassen,
**dadurch gekennzeichnet, dass**
die kinematischen Mittel einen ersten Betätigungshebel (21) und einen zweiten Betätigungshebel (22) umfassen, die jeweils mit dem ersten Regelmotor (11) bzw. dem zweiten Regelmotor (12) verbunden sind und jeweils an einem ersten Verbindungsarm (31) bzw. einem zweiten Verbindungsarm (32) drehbar angelenkt sind, die mit dem Stab (2) durch dazwischen angeordnete Führungsmittel drehbar verbunden sind, wobei die von der Drahtführung (3) übernommene Form der Bewegungsbahnen ausschließlich durch die voneinander verschiedene Rotation der Motoren (11, 12) bedingt ist, die eine Bewegungskomposition ergeben, die in Abhängigkeit von den spezifischen Winkeln, die von den Verbindungsarmen (31, 32) der Betätigungshebel eingenommen werden, veränderlich ist, wobei jedoch immer eine Translationsbewegung des Drahtführungsträgerstabs (2) beibehalten wird, die parallel zu ihm selbst ausgebildet ist.

2. Vorrichtung nach Anspruch 1, **dadurch gekennzeichnet, dass** sie eine Steuergruppe (13) umfasst, die für eine gekoppelte Betätigung der Regelmotoren (11, 12) mit diesen zusammengekoppelt ist.

3. Vorrichtung nach einem oder mehreren der vorhergehenden Ansprüche, **dadurch gekennzeichnet, dass** die Führungsmittel umfassen: einen unteren Schlitten (40), der auf querliegenden Führungen (41) beweglich ist, die im Wesentlichen parallel zum Stab (2) angeordnet sind, und einen oberen Schlitten (42), der mit dem unteren Schlitten (40) verbunden ist und auf längsgerichteten Führungen (43) beweglich ist, die im Wesentlichen senkrecht zu den querliegenden Führungen (41) angeordnet sind, wobei die Verbindungsarme (31, 32) dem oberen Schlitten (42) zugeordnet sind, der den Stab (2) trägt.

4. Vorrichtung nach einem der Ansprüche 1 oder 2, **dadurch gekennzeichnet, dass** die Führungsmittel umfassen: einen Führungshebel (50), der mit einem seiner Enden an der Trägerstruktur der Regelmotoren (11, 12) und mit dem anderen Ende an einem ersten Führungsarm (51) und einem zweiten Führungsarm (52) drehbar angelenkt ist, die an ihrem jeweils anderen Ende am Drehpunkt eines der Verbindungsarme (32) zum Stab (2) und am Drehpunkt zwischen dem anderen Arm (31) der Verbindungsarme und dem zugehörigen Betätigungshebel (21) drehbar angelenkt sind.

5. Vorrichtung nach Anspruch 4, **dadurch gekennzeichnet, dass** der erste Führungsarm (51) im Wesentlichen parallel zu dem anderen Arm (31) der Verbindungsarme angeordnet ist und die gleiche Länge aufweist, wobei der zweite Führungsarm (52) eine Länge aufweist, die gleich dem Abstand zwischen den Drehpunkten der Verbindungsarme (31, 32) zum Stab (2) ist, so dass eine parallelogrammförmige Verbindung zwischen dem ersten Führungsarm (51), dem zweiten Führungsarm (52), dem anderen Verbindungsarm (31) und dem Stab (2) ausgebildet ist.

## Revendications

1. Dispositif pour enrouler un fil métallique sur des poteaux ayant n'importe quelle géométrie, comprenant une barre (2) qui supporte un guide-fil (3) avec au moins un tube de guidage de fil, ladite barre (2) étant mobile sous l'action de moyens formant moteurs (11, 12) qui génèrent un mouvement alternatif continu, des moyens cinématiques (21, 22, 31, 32) étant en outre prévus, qui sont intercalés entre lesdits moyens formant moteurs (11, 12) et ladite barre (2) pour la translation de ladite barre (2) substantiellement parallèlement à elle-même, lesdits moyens formant moteurs comprenant un premier moteur couple (11) et un deuxième moteur couple (12), **caractérisé en ce que** lesdits moyens cinématiques comprennent un premier levier d'actionnement (21) et un deuxième levier d'actionnement (22) connectés respectivement audit premier moteur couple (11) et audit deuxième moteur couple (12) et pivotant respectivement sur un premier bras de connexion (31) et sur un deuxième bras de connexion (32), qui sont connectés de façon pivotante à ladite barre (2) par l'intermédiaire de moyens de guidage, dans lequel la forme des trajectoires suivies par le guide-fil (3) est obtenue exclusivement à partir de la rotation mutuelle différente desdits moteurs (11, 12), qui créent une composition de mouvement qui peut varier en fonction des angles spécifiques pris par lesdits bras de connexion (31, 32) des leviers d'actionnement, en maintenant toutefois toujours une translation de la barre de support de guide-fil (2) qui est parallèle à elle-même.

2. Dispositif selon la revendication 1, **caractérisé en ce qu'**il comprend un ensemble de commande (13) interconnecté entre lesdits moteurs couple (11, 12) pour l'actionnement interconnecté de ceux-ci.

3. Dispositif selon l'une ou plusieurs des revendications précédentes, **caractérisé en ce que** lesdits moyens de guidage comprennent un chariot inférieur (40) mobile sur des guides transversaux (41) qui sont substantiellement parallèles à ladite barre (2), et un chariot supérieur (42), connecté audit chariot inférieur (40) et mobile sur des guides longitudinaux (43) qui sont substantiellement perpendiculaires par rapport auxdits guides transversaux (41), lesdits bras de connexion (31, 32) étant associés audit chariot supérieur (42) qui supporte ladite barre (2).

4. Dispositif selon l'une des revendications 1 et 2, **caractérisé en ce que** lesdits moyens de guidage comprennent un levier de guidage (50) pivotant, en une de ses extrémités, sur la structure de support desdits moteurs couple (11, 12) et, à l'autre extrémité, sur un premier bras de guidage (51) et un deuxième bras de guidage (52) pivotant respectivement, à leurs autres extrémités, sur le point de pivot de l'un des bras de connexion (32) sur ladite barre (2) et sur le point de pivot entre l'autre (31) desdits bras de connexion et le levier d'actionnement correspondant (21).

5. Dispositif selon la revendication 4, **caractérisé en ce que** ledit premier bras de guidage (51) est agencé substantiellement parallèlement audit autre bras (31) desdits bras de connexion et a la même longueur, ledit deuxième bras de guidage (52) ayant une longueur qui est égale à la distance entre les points de pivot desdits bras de connexion (31, 32) sur ladite barre (2) pour fournir une connexion en parallélogramme entre ledit premier bras de guidage (51), ledit deuxième bras de guidage (52), ledit autre bras de connexion (31) et ladite barre (2).
